# EUROPÄISCHE PATENTSCHRIFT

(11) **EP 1 843 886 B1**
(45) Veröffentlichungstag und Bekanntmachung des Hinweises auf die Patenterteilung: **02.06.2010**
(21) Anmeldenummer: 06704502.1
(22) Anmeldetag: 03.02.2006
(51) Int. Cl.: B29C 44/16, B29C 44/12, A63C 5/048, A63C 5/12

(54) **GLEITGERÄT UND VERFAHREN ZUR HERSTELLUNG DAVON**
SLIDING EQUIPMENT AND METHOD FOR PRODUCING SAID EQUIPMENT
DISPOSITIF DE GLISSE ET PROCEDE POUR SA PRODUCTION

(30) Priorität: 04.02.2005 AT 1842005
(43) Veröffentlichungstag der Anmeldung: 17.10.2007
(73) Patentinhaber: Hexcel Holding GmbH, 4061 Pasching (AT)
(72) Erfinder: HASLHOFER, Josef, A-4055 Pucking (AT); WENIDOPPLER, Birgit, A-4713 Gallspach (AT); GANGL, Wolfgang, A-4040 Linz (AT)
(74) Vertreter: Best, Michael
(86) Internationale Anmeldenummer: PCT/EP2006/000954
(87) Internationale Veröffentlichungsnummer: WO 2006/082070

(56) Entgegenhaltungen:
- EP-A- 0 750 925
- EP-A- 1 504 796
- FR-A- 2 237 655
- FR-A- 2 606 655
- US-A- 3 415 529
- US-A- 3 958 810
- US-A- 5 498 016
- US-A- 5 501 825

## Beschreibung

Die Erfindung betrifft ein Verfahren zur Herstellung eines Gleitgeräts, wobei in eine Form, die dem Gleitgerät entspricht, und die einen Formboden und einen Formdeckel aufweist, Profilkanten, Untergurt und Ober- oder Schalengurt eingebracht werden und die Form anschließend in einem Harzschauminjektionsverfahren ausgeschäumt wird, sowie durch dieses Verfahren erhältliche Gleitgeräte. Bei den Gleitgeräten handelt es sich insbesondere um Wintersportgeräte, z.B. Ski und Snowboards. Zur Herstellung der Gleitgeräte werden Gitterlaminate eingesetzt, die besonders vorteilhaft durch die Profilkanten fixiert werden können, wodurch das Herstellungsverfahren erheblich vereinfacht wird.

Die Herstellung von Gleitgeräten kann prinzipiell nach zwei grundlegend verschiedenen Verfahren erfolgen.

Das älteste klassische Verfahren zur Herstellung von Gleitgeräten, insbesondere Skiern, ist die Sandwichbauweise.

Die einzelnen Schichten und Teile eines Skis werden bei diesem Verfahren zwischen zwei Stahlblechen in einer Heißpresse verpresst: Laufsohle, Zuggurt (glasfaserverstärkter Kunststoff/GFK, Holz, Aluminium- oder Stahllegierungen), der Kern aus verleimten Hölzern bzw. Polyurethan-Hartschaum (PUR-Schaum), Spitzen- und Endeinlagen aus Gummi oder Elastomer, eine Kernverstärkung im Bindungsbereich, der Druckgurt aus GFK, Aluminium und bei Holzgurten eine Deckschicht, beispielsweise aus Polyamid (PA), Acrylbutylstyrol (ABS), TPU mit dazwischenliegenden Leimschichten werden für den Pressvorgang in etwa der genannten Reihenfolge aufeinandergelegt und miteinander verpresst, wobei überschüssiger Leim bzw. Klebstoff an den Seiten austritt. Um den Ski auf seine Standardbreitenmaße zu bringen, wird der Skirohling nach dem Pressvorgang formgefräst und ausgefertigt.

Dieses Herstellungsverfahren ist außerordentlich lohnintensiv und wird daher heutzutage nur noch in sehr kleinem Umgang bei sehr teuren Skiern benutzt.

Das zweite Verfahren umfasst eine Schauminjektionstechnik unter Verwendung von thermoreaktivem Material.

Bei Schauminjektionsverfahren wird das thermoreaktive Material (vorzugsweise Polyurethan (PUR)-Schaum) zwischen dem Untergurtverbund (PE + GFK), dem Obergurtverbund (PA oder TPU oder ABS + GFK), die in eine geeignete Form, in der Regel in einer beheizten, zerlegbaren Aluminiumkassette eingelegt sind, eingespritzt. Beim Aushärten bildet sich der Skikem und erfolgt gleichzeitig die Verklebung des Kerns mit den vorher eingelegten Skibaukomponenten.

Dieses Verfahren ermöglicht eine weniger zeitintensive aber auch materialsparende und somit kostengünstigere Herstellung.

US 5,498,016 offenbart ein Verfahren zur Herstellung eines Skies unter Verwendung eines Verstärkungselements, das perforiert und mit einer formbaren Metallstruktur versehen ist. Bei dem Verfahren werden herkömmliche Profilkanten eingesetzt.

Auch der AT-A 400 307 ist ein Schauminjektionsverfahren zur Herstellung eines Skis zu entnehmen. Bei diesem Verfahren bildet bevorzugt der Ober- oder Schalengurt einen Teil der Form. Der Ober- oder Schalengurt muss daher bereits in einem eigenen Verfahren exakt nach der gewünschten Form des Wintersportgeräts ausgebildet worden sein. Der Ober- oder Schalengurt wird dann durch den eingespritzten Polymerschaum fest mit einem Kern verbunden, der wiederum fest mit einem Untergurt verbunden ist.

Diese bekannten Verfahren sind geeignet zur Herstellung von Skiern mit einer Oberseite, die flach ausgebildet ist. Es besteht jedoch ein Bedarf nach Skiern und anderen Gleitgeräten, bei denen die Oberseite nicht flach ausgebildet ist, sondern mit dreidimensionalen Elementen versehen ist.

Insbesondere bei fortgeschrittenen Skiläufern besteht ein Bedarf nach Skiern mit verbesserten Eigenschaften, beispielsweise hinsichtlich der Drehfreudigkeit, Geschwindigkeitsstabilität und Kantengriffreaktion. Zur Verbesserung dieser Eigenschaften eines Skis ist eine Einschränkung auf flache Oberflächen hinderlich, da Veränderungen der Skier nur an der inneren Struktur der seitlichen Biegung usw. möglich sind.

Hochwertige Skier und andere Gleitgeräte mit dreidimensionalen Elementen auf der Oberfläche können mittels eines Harzschauminjektionsverfahrens aber nur aufwendig hergestellt werden. Hierzu wird in der Regel zunächst ein Obergurt oder eine Schale bzw. ein Schalengurt so ausgeformt, dass er der gewünschten dreidimensionalen Oberseite des Skis oder Gleitgeräts exakt entspricht. Der so ausgeformte Ober- oder Schalengurt wird dann in die Form zur Herstellung des Skis oder des Gleitgeräts eingesetzt, und das Harzschauminjektionsverfahren wird auf übliche Art und Weise durchgeführt. Dieses Verfahren ist aufwendig und teuer, da es mindestens zwei Arbeitsgänge umfasst, nämlich die .separate Formung des Ober- oder Schalengurts, die in der Regel manuelle Entnahme des Ober- oder Schalengurts aus der Form und das Einsetzen des vorgeformten Ober oder Schalengurts in die Form zur Herstellung des Skis.

Zur Lösung dieses Problems schlägt beispielsweise die DE-A 34 37 865 ein Verfahren vor, bei dem der Ober- oder Schalengurt nicht steif ausgebildet sondern flexibel ausgebildet ist: Es kann daher ein standardmäßig vorgefertigter, im wesentlicher flacher Ober- oder Schalengurt direkt in die Form zur Herstellung des Skis eingesetzt werden, die Aussparungen für dreidimensionale Elemente auf der Oberfläche des Skis enthält. Dadurch, dass der Ober- oder Schalengurt nicht steif ausgebildet ist, wird er durch den Anpressdruck bei dem Harzschauminjektionsverfahren passgenau in die Aussparungen bzw. dreidimensionalen Elemente gedrückt. In der Druckschrift wird auch beschrieben, dass ein Ober- oder Schalengurt mit einer verhältnismäßig hohen Steifigkeit verwendet werden kann, die so hoch ist, dass sie nicht durch den Aufschäumdruck des Harzschaums deformiert wird. Bei Verwendung eines solchen Materials ist der Ober- oder Schalengurt dann mit Durchgangslöchern ausgestattet, die es dem Harzschaum ermöglichen, durch diesen steifen Ober- oder Schalengurt durchzudringen und ein darüberliegendes flexibles Harzstück zu verformen, das in die Aussparungen bzw. dreidimensionalen Elemente der Oberseite des Skis angepresst wird und dadurch die gewünschte glatte Oberfläche erzeugt. Auch ein derartiger Ober oder Schalengurt muss aber für jede Geometrie und Größe eines Gleitgeräts gesondert hergestellt werden, da er passgenau in die Form eingesetzt werden muss.

Allen bekannten Harzschauminjektionsverfahren ist gemeinsam, dass der Untergurt sowie der Ober- oder Schalengurt separat, z.B. in Form eines Prepregs, vorgefertigt werden müssen, so dass sie passgenau in die Form eingesetzt werden können, damit sie beim Injizieren des Harzschaums positionsstabil sind. Dies schränkt aber die Wahl der einsetzbaren Untergurte, insbesondere aber der Ober- oder Schalengurte erheblich ein, und es sind insbesondere nur geringe Fertigungstoleranzen bei den Ober- oder Schalengurten zulässig. Außerdem muss die verwendete Form geeignet sein, die Ober-oder Schalengurte exakt aufzunehmen, was spezielle Ausgestaltungen der Form erfordert, wie es z.B. in der DE-A 34 37 865 beschrieben ist. Insbesondere bei Verfahren zur Herstellung von Skiern mit dreidimensionalen Elementen auf der Oberfläche kann es gewünscht sein, eine größere Freiheit bei der Auswahl der Ober- oder Schalengurte zu haben.

Es besteht daher ein Bedarf nach einem Verfahren zur Herstellung von Gleitgeräten, insbesondere Skiern, bei denen keine separate Vorfertigung eines speziell geformten Untergurts und insbesondere Ober- oder Schalengurts erforderlich ist und das gleichzeitig eine größere Variabilität bei der Form und Dimension der einsetzbaren Ober- oder Schalengurte aber auch der Untergurte zulässt. Es wäre vorteilhaft, wenn in dem Verfahren zur Herstellung von Gleitgeräten, insbesondere Skiern, auch Ober- bzw. Schalengurte eingesetzt werden könnten, die nicht exakt auf die Form und die Ausmessungen der Form zur Herstellung des Skis angepasst wurden.

Darüber hinaus kann es gewünscht sein, dass die Gleitgeräte, insbesondere die Ski, ein möglichst geringes Gewicht aufweisen, insbesondere bei Kinderski. Der Untergurt, insbesondere aber auch der Ober- bzw. Schalengurt, tragen wesentlich zum Gewicht der Ski bei. Auf der anderen Seite müssen die Gurte auch ausreichende mechanische Eigenschaften zur Verfügung stellen, so dass der Untergurt, insbesondere aber auch der Ober bzw. Schalengurt, bei möglichst geringem Gewicht möglichst vorteilhafte mechanische Eigenschaften des Gleitgeräts liefern sollten. Bevorzugt ist das Gewicht eines GFK-Verstärkungsmaterials mit ca. 2000 g/m² oder weniger, z.B. etwa 1200g/m², und das Gewicht des Verstärkungsmaterials eines Kinderskis sollte bei 1100 g/m² oder weniger, z.B. bei etwa 750 g/m², liegen. Auch stellt dies erhebliche Anforderungen an das Material für den Untergurt, insbesondere aber auch für den Ober- bzw. Schalengurt.

Gleitgeräte, die unter Verwendung zusätzlicher Verstärkungsmaterialien hergestellt werden, sind z.B. aus der EP-A 0 729 769 bekannt. Hier wurde vor dem Ausschäumen ein vorgefertigtes Verstärkungselement in die Form eingebracht und mit Hilfe einer sich auf dem Untergurt angebrachten, zusätzlichen, Befestigungsvorrichtung fixiert. Auch die FR-A 2 696 126 offenbart einen Ski, bei dem ein separat angefertigtes Verstärkungselement vor dem Ausschäumen in die Form eingebracht wurde, wobei hier die Befestigung am Untergurt, und damit in der Form, mit Hilfe von Magneten vorgenommen wurde. Die EP-A 1 417 989 offenbart einen Ski, bei dem Untergurt und/oder Obergurt mit einer zusätzlichen Verstärkungslage versehen sind, die bevorzugt durch mindestens einen, zwischen Ober- und Untergurt angeordneten, Hohlkörper fixiert werden.

Die EP 729 769 offenbart ein Verfahren zur Herstellung eines Skis, bei dem stangenförmige Verstärkungselemente durch ein Versteifungselement vor dem Ausschäumen in der Form fixiert werden. Das Versteifungselement weist Löcher auf, durch die der Harzschaum hindurchtreten kann. Das Versteifungselement wird durch Druck in der Form fixiert. Auch bei dieser Ausgestaltung ist es erforderlich, die Versteifungselemente aufwendig und passgenau vorzufertigen, da ansonsten die Fixierung in der Form nicht gewährleistet ist.

Die im Stand der Technik bekannten Ausgestaltungen erfordern somit immer einen sehr aufwendigen Innenaufbau zur Fixierung der Verstärkungsmaterialien.

Gleitgeräte für den Wintersport weisen eine Profilkante auf, um Haltbarkeit; Stabilität und Laufverhalten des Gleitgeräts zu verbessern. Stellt man ein Gleitgerät für den Wintersport mit einem Schauminjektionsverfahren her, werden die Profilkanten in die Form eingesetzt und durch das Ausschäumen mit dem Ski verbunden. Vorteilhafte Profilkanten sind beispielsweise in der EP-A 601 024 offenbart. Die Profilkante weist eine Flanke mit gestanzten Ausnehmungen oder Öffnungen auf, mit denen die Profilkante besonders gut mit dem Ski verzahnt oder verankert werden kann.

Es ist bekannt, die Seitenwangen von Skiern unter Verwendung speziell ausgeformter Profilkanten zu fixieren. Die AT 391 273 offenbart beispielsweise einen Ski, bei dem die Seitenwangen durch sich auf der Oberfläche der Profilkante befindende Vorsprünge gegen die Außenform gedrückt werden, so dass ein etwaiges Verrutschen der Seitenwangen während des Ausschäumvorganges verhindert wird. Ein ähnlicher Aufbau ist auch in der AT 366 270 beschrieben, die sich von der zuvor genannten Patentschrift nur dahingehend unterscheidet, dass auch noch der Obergurt mit den Seitenwangen verzahnt wird. Bei dem Obergurt handelt es sich um eine konventionelle flache Struktur. Diese Art der Befestigung des Obergurts ist nicht geeignet um einen nicht ebenen Obergurt zu fixieren und auf solche Ski eingeschränkt, die Seitenwangen aufweisen.

Ober- oder Schalengurte, die aus faserverstärktem Kunststoff mit einer Gitterstruktur gebildet sind, werden in der AT 391 273 und der AT 366 270 nicht offenbart.

Der vorliegenden Erfindung liegt die Aufgabe zugrunde, ein Schauminjektionsverfahren für die Herstellung eines Gleitgeräts zur Verfügung zu stellen, das die vorstehenden Probleme nicht zeigt und mit dem auf einfache Art und Weise Gleitgeräte, insbesondere Ski, hergestellt werden können, die hervorragende mechanische Eigenschaften mit einem geringen Gewicht kombinieren. Demnach soll ein Verfahren zur Verfügung gestellt werden, das es ermöglicht, Gleitgeräte mit verstärktem aber einfachem Innenaufbau und geringem Gewicht herzustellen, das aber auch die Gestaltung dreidimensionaler Elemente ermöglicht.

Diese Aufgabe wird durch den Gegenstand der Patentansprüche gelöst. Die Erfindung stellt damit ein vorteilhaftes Verfahren zur Herstellung von Gleitgeräten und die damit herstellbaren Gleitgeräte zur Verfügung.

Die Erfindung betrifft damit insbesondere ein Schauminjektionsverfahren zur Herstellung von Gleitgeräten, insbesondere Skiern und Snowboards, bei dem der Ober- oder Schalengurt aus mindestens einer Schicht eines faserverstärkten Kunststoffs besteht, der eine Gitterstruktur aufweist und somit für den während des Injektionsverfahrens eingebrachten Harzschaum durchlässig ist.

Überraschend wurde gefunden, dass derartige faserverstärkte Kunststoffe einfach in eine gewünschte Form, wie eine Bogenform oder eine Trapezform, gebogen werden können, die besonders vorteilhafte Ober- oder Schalengurte darstellt. Die faserverstärkten Kunststoffe behalten trotz der Verformung ihre verstärkenden Eigenschaften und ihre Flexibilität. Die Verwendung dieser faserverstärkten Kunststoffe bietet daher die gleichen Vorteile, die vorher nur durch Verwendung aufwendig, speziell für eine bestimmte Form hergestellter, dreidimensionaler Elemente, wie sie z.B. in der EP 729 769 offenbart sind, erzielt werden konnten.

Ein erheblicher Vorteil der faserverstärkten Kunststoffe liegt auch darin, dass sie einfach über die Profilkanten in der Form fixiert werden können, wodurch das Herstellungsverfahren erheblich vereinfacht wird. Insbesondere ist es nicht mehr erforderlich, wie im Stand der Technik, für jede Form ein speziell angepasstes Verstärkungselement (bzw. einen speziell angepassten Ober- oder Schalengurt) zu verwenden, sondern die durch ein einfaches mechanisches Verfahren (Biegen oder "Knicken" der faserverstärkten Kunststoffbahnen) herstellbaren Ober- bzw. Schalengurte passen in praktisch jede Form zur Herstellung von Gleitgeräten bzw. können einfach z.B. durch Fräsen vor Ort an die gewünschte Form angepasst werden.

Derartige faserverstärkte Kunststoffe mit einer Gitterstruktur werden auch als Gitterlaminat bezeichnet und im Rahmen dieser Beschreibung werden beide Begriffe synonym verwendet. Die Verwendung eines derartigen Gitterlaminats ermöglicht sowohl das Ausschäumen der Form, bei dem der Ober- oder Schalengurt und/oder auch der Untergurt an die Außenstruktur des Gleitgeräts angepasst ist, so dass der Schaum lediglich in die Gitterstruktur eindringen muss, als auch das Ausschäumen der Form, bei dem der Ober-oder Schalengurt nicht an die Außenform des Gleitgeräts angepasst ist, so dass der Schaum durch die Gitterstruktur hindurchdringt. Wird das erfindungsgemäße Verfahren für die Herstellung von Gleitgeräten mit dreidimensional strukturierter Oberfläche verwendet, so ist es von besonderem Vorteil, dass der Einsatz eines derartigen gitterartigen Materials auch das Ausschäumen der dreidimensionalen Elemente während des Injektionsprozesses ermöglicht, ohne dass in einem separaten Fertigungsschritt ein an die äußere Form exakt angepasster Ober- oder Schalengurt hergestellt wird.

Erfindungsgemäß ist es besonders bevorzugt, dass zumindest der Ober- oder Schalengurt aus dem faserverstärkten Kunststoff mit einer Gitterstruktur besteht.

Der Untergurt besteht bevorzugt ebenfalls aus dem faserverstärkten Kunststoff mit einer Gitterstruktur wie vorstehend beschrieben. Alternativ kann erfindungsgemäß aber auch ein übliches Material für den Untergurt verwendet werden, z.B. die kommerziell erhältlichen Produkte G-R84, G-R 64FP, G-EV 600B, G-EV 675B; G-EV 696R erhältlich von der Fa. Hexcel Holding, Pasching, Österreich.

Die Verwendung eines Ober- oder Schalengurts mit durchlässiger Gitterstruktur ermöglicht den Einsatz von Standardformen des Ober- bzw. Schalengurts auch bei der Herstellung von Gleitgeräten mit komplexen dreidimensionalen Elementen auf der Oberseite, ohne dass ein zusätzlicher Verfahrensschritt zur Ausformung dieser Elemente notwendig ist.

Der faserverstärkte Kunststoff weist bevorzugt einzelne, quer zur Abkantrichtung liegende, leicht verstreckbare Faseranteile auf. Um eine erhöhte Festigkeit des Kunststoffs zu erzielen, sind diese Faseranteile in einer besonders bevorzugten Ausführungsform zu Bündeln kombiniert.

Die Fasern in dem faserverstärkten Kunststoff (Verstärkungsmaterialien) können synthetische oder natürliche Fasern z.B. Glas-, Kohlenstoff- oder Aramid- (aromatisches Polyamid-) Fasern oder auch metallische Drähte umfassen. Erfindungsgemäß bevorzugt sind Glas- bzw. Kohlenstofffasern. Besonders bevorzugt sind die Fasern in dem faserverstärkten Kunststoff mit einer Gitterstruktur als Textil eingebracht.

Typische geeignete Textilien sind z.B. Gelege oder Gewebe. Dabei sollte die Maschenweite der Faserverstärkung ausreichend weit gewählt sein um den Durchfluss des Harzschaumes zu ermöglichen. Die Maschenweite (d.h. der Anteil der Öffnungen) sollte dabei bevorzugt im Bereich von 1 % bis 99%, stärker bevorzugt im Bereich von 20% bis 60% liegen. Ein typischer Gewebestil ist Leinwandbindung.

Die Oberflächenmasse der Fasern der Faserverstärkung beträgt dabei im Allgemeinen 10-2500 g/m², bevorzugt 40-2000 g/m². Die Kohlenstofffäden können dabei aus 3000 bis 320 000, bevorzugt aus 6000 bis 80 000 und bevorzugter aus 12 000 bis 48 000 Einzelfasern bestehen. Bei Glasfaserverstärkungen sind Fasern von 300-4800 tex besonders geeignet.

Bei dem Kunststoff kann es sich beispielsweise um ein thermoplastisches oder wärmehärtendes Harz handeln, wobei wärmehärtende Harze bevorzugt sind: Typische wärmehärtende Harze sind beispielsweise Epoxy, Polyester, Vinylester, Cyanatester, Bismaleimid, Phenol und Novolak-Systeme, wobei Epoxyharze bevorzugt sind. Geeignete Epoxyharze sind z:B. die Epoxyharze des Typs EV, die von der Fa. Hexcel Holding, Pasching, Österreich erhältlich sind.

Faserverstärkte Kunststoffe mit einer Gitterstruktur sind seit langem bekannt und kommerziell erhältlich. Sie werden derzeit z.B. als durchschäumbarer Abstandhalter (Distanz), Obergurtbauteil, Bindungsverstärkung, Verstärkung zur Erzielung planer Grenzflächen (Lauf- und Oberflächengeometrie) eingesetzt. Sie wurden bislang allerdings nur in Form flacher Bauteile verwendet und nicht als Ober- oder Schalengurt an den Profilkanten befestigt. Erfindungsgemäß geeignete faserverstärkte Kunststoffe mit einer Gitterstruktur sind z.B. die in der EP-A 1 046 666 als Prepreg für Honeycombstrukturen beschriebenen Gebilde. Bevorzugte Produkte sind z.B. von der Firma Hexcel Holding (Pasching, Österreich) unter der Bezeichnung G-EV 552G1, G-EV 846 GI, G-EV 984GI, G-EV 1600GI erhältlich.

Die Verwendung derartiger faserverstärkter Kunststoffe mit einer Gitterstruktur hat auch den Vorteil, dass das mit ihnen hergestellte Gleitgerät bei einem sehr geringen Gewicht ausgesprochen vorteilhafte mechanische Eigenschaften aufweist. Insbesondere weisen die faserverstärkten Kunststoffe mit einer Gitterstruktur ein Gewicht von 2000 g/m² oder weniger, z.B. etwa 1200 g/m², auf, und auch noch leichtere Produkte, die für Kinderski geeignet sind und ein Gewicht von nur 1100 g/m² oder weniger, z.B. etwa 750 g/m² aufweisen, weisen immer noch gute mechanische Eigenschaften auf, wie sie in der Tabelle 1 für einige kommerziell erhältliche Produkte beispielhaft dargelegt werden.

**Tabelle 1**

| | Zugfestigkeit [MPa] | Zug-E-Modul [GPa] |
|---|---|---|
| G-EV 552GI | 0°: 230 ± 35 | 0°: 9,1 ± 1,4 |
| Gewicht ca. 748 g/m² | 90°: 270 ± 41 | 90°: 10 ± 1.5 |
| G-EV 846 GI | 0°: 130 ± 19,5 | 0°: 5,3 ± 0,8 |
| Gewicht ca. 1032 g/m² | 90°: 390 ± 59 | 90°: 14,5 ± 2,2 |
| G-EV 984GI | 0°: 430 ± 64 | 0°: 18,8 ± 3,0 |
| Gewicht ca. 1200 g/m² | | |
| G-EV 1600GI | 0°: 550 ± 83 | 0°: 24,3 ± 3,6 |
| Gewicht ca. 1990 g/m² | | |

In einer besonders bevorzugten Ausführungsform ist der Untergurt und/oder der Ober- oder Schalengurt aus mehreren Lagen aufgebaut, insbesondere aus 2 oder 3 Lagen. Besonders bevorzugt handelt es sich bei allen Lagen um Lagen aus dem vorstehend beschriebenen faserverstärkten Kunststoff.

Der faserverstärkte Kunststoff mit einer Gitterstruktur kann auch als eine Polymermatrix angesehen werden, in die die Faserverstärkungen eingelegt sind.

Die Ausbildung des Ober- oder Schalengurts kann unabhängig von der äußeren Struktur des Gleitgeräts erfolgen. Der Ober- oder Schalengurt ist beispielsweise trapezförmig ausgebildet und weist beispielsweise eine bogenförmige Struktur auf. Der bogenförmige Ober- oder Schalengurt kann auf seiner Oberseite ein zusätzliches Verstärkungselement aufweisen, das z.B. zur Befestigung der Bindung dient. Ober- oder Schalengurt und Verstärkungselement bestehen vorzugsweise aus dem gleichen Material, es ist aber auch möglich, jeweils unterschiedliche Materialien zu verwenden. Ober- oder Schalengurt und Verstärkungselement können z.B. durch Klemmen, übliche Klebstoffe bzw. Klebefilme (Gitter), Stifte oder auch Distanzhalter etc. verbunden sein oder auch unverbunden sein.

In dem erfindungsgemäßen Verfahren wird zur Herstellung solcher Gleitgeräte mit dreidimensional strukturierter Oberfläche bevorzugt eine Form verwendet, deren Formdeckel die dreidimensional strukturellen Elemente aufweist. Dabei sind Ausführungsformen mit einem aber auch mehreren dreidimensional strukturellen Elementen denkbar. Ein Vorteil des erfindungsgemäßen Verfahrens besteht darin, dass übliche Standardformen verwendet werden können und eine Anpassung an das erfindungsgemäße Verfahren nicht erforderlich ist.

Der Ober- oder Schalengurt des erfindungsgemäßen Verfahrens wird vor dem Ausschäumen lösbar an den Profilkanten fixiert, wobei die Profilkanten Befestigungseinrichtungen aufweisen. Die Art der Befestigungseinrichtungen ist nicht besonders eingeschränkt, und als Befestigungseinrichtung wird erfindungsgemäß jede Ausgestaltung der Profilkante angesehen, durch die der Ober- oder Schalengurt an der Profilkante (vor dem Ausschäumen) lösbar in der Form fixiert werden kann.

Der Ober- oder Schalengurt ist daher über die Befestigungsvorrichtung mit den Profilkanten lösbar verbunden und berührt die Profilkanten. Auch bei einem fertig hergestellten Ski kann daher leicht festgestellt werden, ob er nach dem erfindungsgemäßen Verfahren hergestellt wurde, da die so hergestellten Ski eine andere Struktur aufweisen als die bekannten Ski und damit neu sind. An den Skiern kann einfach überprüft werden, ob sie einen Ober- oder Schalengurt aufweisen, der aus einem Gitterlaminat geformt wurde und der die Profilkanten berührt.

Erfindungsgemäß besonders bevorzugt handelt es sich bei den Befestigungseinrichtungen um laschenartige Ausbildungen der Profilkanten. Da das Gitterlaminat auch in verformtem Zustand seine Flexibilität behält, ist eine Befestigung durch Einklemmen zwischen den Laschen der Profilkanten besonders leicht möglich. Gleichzeitig wird durch die laschenartigen Ausbildungen an der Profilkante die Verankerung der Profilkante in dem Gleitgerät nach dem Ausschäumen verbessert. Es wurde gefunden, dass insbesondere die Fixierung des Obergurts, der auch ein Verstärkungselement aufweisen kann, bzw. ein derartiges Verstärkungselement darstellt in der Form zur Herstellung des Gleitgeräts vor dem Ausschäumen dann ausreichend stabil ist, wenn die Profilkanten laschenartige Ausbildungen aufweisen, die zur jeweils gegenüberliegenden Profilkante hin so aufgebogen sind, dass sie mit der Kantenflanke der Profilkante (also mit einer Ebene, die zu dem Formdeckel bzw. dem Formboden und auch zur Unterseite des Gleitgeräts parallel ist) einen Winkel α<90° bilden, so dass gilt 0°<α<90°. Durch diese Ausgestaltung wird auch sichergestellt, dass der Ober- oder Schalengurt mit Abstand zu der äußeren Umhüllung der Form eingeklemmt wird, also nicht die Außenhülle des Gleitgeräts bildet.

Gleitgeräte wie Ski oder Snowboards weisen in der Regel zwei Profilkanten auf. Erfindungsgemäß bevorzugt weist zumindest eine der Profilkanten diese laschenartigen Ausbildungen auf, besonders bevorzugt haben aber beide Profilkanten des Gleitgeräts die erfindungsgemäße Ausgestaltung mit den laschenartigen Ausbildungen.

Die erfindungsgemäß verwendeten besonders vorteilhaften Profilkanten mit den laschenartigen Ausbildungen sind im Stand der Technik noch nicht beschrieben. Sie eignen sich besonders zur Fixierung des Ober oder. Schalengurts aus dem faserverstärkten Kunststoff mit Gitterstruktur wie vorstehend beschrieben, sie können aber auch generell zur Fixierung anderer bekannter Ober- bzw. Schalengurte und Untergurte verwendet werden, und die Erfindung betrifft auch derartige Ausführungsformen.

Bevorzugt wird zumindest der Ober- oder Schalengurt durch die laschenartigen Ausbildungen an der Profilkante fixiert, es ist aber auch möglich, dass auch der Untergurt mit den laschenartigen Ausbildungen in der Form fixiert wird.

Ein erheblicher Vorteil des erfindungsgemäßen Verfahrens liegt darin, dass verschieden geformte Ober- oder Schalengurte positionsstabil in ein und dieselbe Form eingebracht werden können.

Die Profilkanten, die für das erfindungsgemäße Verfahren verwendet werden können, bestehen üblicherweise aus Stahl, das eine gute Stabilität und Kantenwirksamkeit des Gleitgeräts gewährleistet. Die Profilkanten können auf an sich bekannte Art und Weise hergestellt werden, z.B. wie in der EP-A 601 024 beschrieben ist, wobei jedoch erfindungsgemäß laschenartige Ausbildungen an den Profilkanten vorzusehen sind. Die Profilkanten werden auf übliche Art und Weise in die Form zum Ausschäumen des Gleitgeräts eingebracht und beispielsweise durch Magneten befestigt, wie dies dem Fachmann bekannt ist.

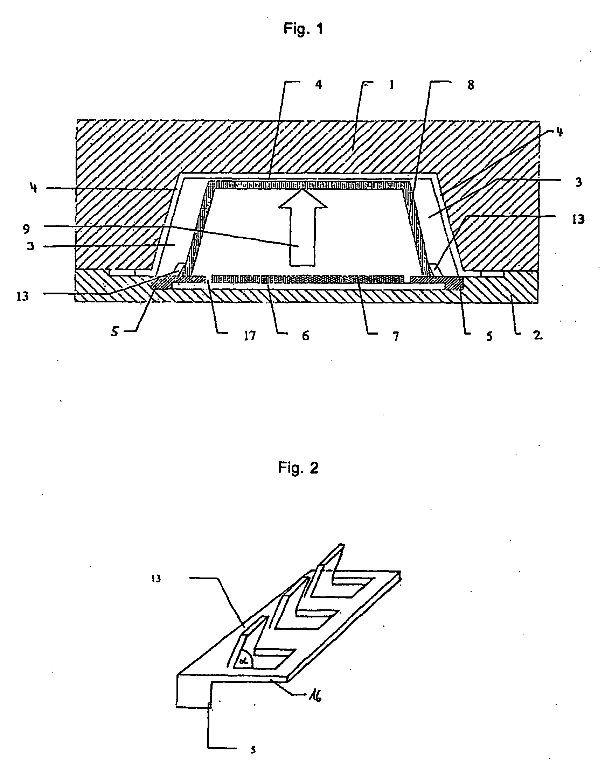

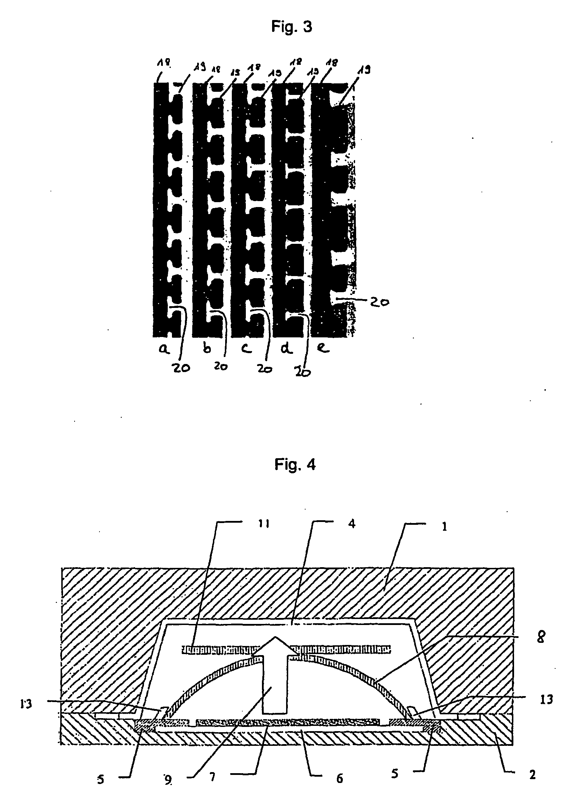

Beispiele vorteilhafter Ausgestaltungen der laschenartigen Ausbildungen sind in den Figuren 2 und 3 dargestellt. Profilkanten mit laschenartigen Ausbildungen können beispielsweise entsprechend der EP-A 601 024 (deren Inhalt durch Bezugnahme hier aufgenommen wird) hergestellt werden, wobei allerdings in die Flanke der Profilkante keine Löcher gestanzt werden, sondern Laschen, die anschließend aufgebogen werden (Figur 2). Erfindungsgemäß ist es aber auch möglich, dass die laschenartigen Ausbildungen aus der Flanke ausgeschnitten werden und anschließend nur zum Teil aufgebogen werden, so dass der Untergurt und/oder der Ober- bzw. Schalengurt zwischen aufgebogenen und nicht aufgebogenen Laschen eingesetzt und somit befestigt werden kann (Figur 3).

Die Flanke der Profilkante hat z. B. eine Dicke im Bereich von 0,2 mm bis 9,5 mm, bevorzugt von 0,5 mm bis 9,2 mm, stärker bevorzugt von 1,2 mm bis 3,5 mm und am stärksten bevorzugt von 1,5 mm bis 3,2 mm. Die aufgebogenen laschenartigen Ausbildungen weisen einen Winkel α < 90"auf, d.h. im Bereich von 0°<α<90°, z.B. von 30° bis 80°, bevorzugt 40° bis 70° auf, so dass der durch sie fixierte Unter- und/oder Ober- oder Schalengurt fest eingefügt werden kann. Der geeignete Winkel für die laschenartigen Ausbildungen hängt von dem zu befestigenden Ober- oder Schalengurt ab. Bevorzugt ist eine flexible Gestaltung der laschenartigen Ausbildungen, die es ermöglicht, den Winkel der laschenartigen Ausbildungen zur Kantenflanke nach der Steigung des Seitenteils des Ober- oder Schalengurts auszurichten, wobei allerdings die erforderliche Stabilität gewährleistet bleiben muss.

Die laschenartigen Ausbildungen können von beliebiger Anzahl sein und zueinander beliebige Abstände aufweisen. Vorteilhaft ist bei Ski eine Anzahl von 1 bis 50, bevorzugt von 10 bis 40, besonders bevorzugt von 20 bis 30, laschenartigen Ausbildungen pro Profilkante (abhängig von der Skilänge). Vorzugsweise haben die laschenartigen Ausbildungen zueinander einen Abstand zwischen 0,5 cm bis 50 cm, bevorzugt zwischen 0,5 cm bis 20 cm, stärker bevorzugt zwischen 1 cm bis 5 cm und am stärksten bevorzugt zwischen 1 cm und 2,5 cm. Zudem haben die laschenartigen Ausbildungen in einer besonderen Ausführungsform eine Breite von 0,2 cm bis 15 cm, bevorzugt von 0,5 cm bis 10 cm und besonders bevorzugt von 1 cm bis 5 cm und besitzen eine Höhe, die vorzugsweise < 20 mm, bevorzugt im Bereich von 2 mm bis 15 mm, und stärker bevorzugt im Bereich von 5 mm bis 10 mm liegt. Dabei ist es auch möglich, dass die laschenartigen Ausbildungen T-förmig ausgeformt sind.

Erfindungsgemäß ist es möglich, dass die Profilkanten nur eine laschenartige Ausbildung aufweisen. Weiterhin ist es möglich, dass die beiden Profilkanten eines Gleitgeräts eine unterschiedliche Anzahl laschenartiger Ausbildungen aufweisen oder bei gleicher oder unterschiedlicher Anzahl der laschenartigen Ausbildungen diese in unterschiedlichen Abständen angebracht sind. Dabei ist es auch möglich, dass die laschenartigen Ausbildungen einer Profilkante unterschiedliche Abstände zueinander aufweisen.

Die laschenartigen Ausbildungen können überdies von unterschiedlicher Höhe sein. Erfindungsgemäß bevorzugt ist dabei, dass die Ausbildungen in der Mitte des Skis am höchsten sind und die Höhe zu den Enden hin abnimmt. Ebenso ist es möglich, dass sich die Ausbildungen nur in der Mitte des Skis befinden. Zudem ist es erfindungsgemäß möglich, dass die Höhe der Ausbildungen beider Profilkanten eines Gleitgeräts unterschiedlich gewählt wird.

Wie aus den Figuren der Anmeldung hervorgeht, ist der Winkel α der Winkel zwischen der laschenartigen Ausbildung und Kantenflanke, wobei die Kantenflanke in der Regel parallel zu dem Formdeckel bzw. dem Formboden ist. Die Kantenflanke ist dabei in der Regel auch parallel zu der Ober- und Unterseite des Gleitgeräts, also auch parallel zum Untergurt bzw. zur Gleitfläche. Die laschenartige Ausbildung ist auf die jeweils gegenüberliegende Profilkante gerichtet, so dass die Öffnung des Winkels α eindeutig festgelegt ist.

In der Regel wird das erfindungsgemäße Verfahren so durchgeführt, dass sich zwischen dem Ober- oder Schalengurt und dem Formdeckel eine thermoplastische Deckfolie befindet, die die spätere obere Beschichtung des Gleitgeräts bildet.

Als thermoplastische Deckfolien werden vorzugsweise übliche Folien aus ABS-Blend, TPU (thermoplastisches Polyurethan), PEBA (Polyether-block-amid) oder PA (Polyamid) verwendet. In einer bevorzugten Ausführungsform wird die thermoplastische Deckfolie in der Form befestigt, indem sie an den Seiten zwischen Formboden und Formdeckel beweglich eingelegt wird. Dabei verbleiben überstehende Enden der Deckfolie an den Seiten des Gleitgeräts, die nachträglich entfernt werden.

Während des Injektionsverfahrens dringt der Harzschaum durch die Gitterstruktur des Verstärkungselements ein bzw. hindurch und formt so die thermoplastische Folie entsprechend der von der Form vorgegebenen Außenstruktur des Gleitgeräts aus. Bei dem zum Ausschäumen verwendeten Harzschaum handelt es sich üblicherweise um PUR-Integral-Hartschaum, Polyester- oder Epoxyschaum. PUR-Hartschaum ist erfindungsgemäß besonders bevorzugt, es können alle gängigen PUR-Harzschäume verwendet werden.

Erfindungsgemäß wird ein übliches Harzschauminjektionsverfahren verwendet, wie es im Stand der Technik üblich und dem Fachmann bekannt ist.

Üblicherweise wird in dem erfindungsgemäßen Verfahren zudem eine Laufsohle in die Form eingebracht, die die spätere Unterseite des Gleitgeräts bildet. Solche Laufsohlen bestehen meistens aus Polyethylen. Während des Ausschäumens wird die Laufsohle durch den durch den Untergurt ein- bzw. hindurchdringenden Harzschaum mit dem Untergurt verklebt. Die Laufsohle kann aber auch auf übliche Art und Weise, wie es im Stand der Technik bekannt ist, mit dem Untergurt verbunden werden.

Das durch das erfindungsgemäße Verfahren erhältliche Gleitgerät ist damit üblicherweise aus einem Untergurt und einem Ober- oder Schalengurt aufgebaut, die mit Harzschaum ausgeschäumt bzw. durchschäumt wurden, und weist überdies Profilkanten auf, die mit laschenartigen Ausbildungen zur Befestigung des Untergurts und/oder des Ober- oder Schalengurts versehen sind, wie sie in den Figuren 2 und 3 dargestellt werden. Die erfindungsgemäß hergestellten Gleitgeräte sind gegenüber den bekannten Gleitgeräten neu und können auch von diesen unterschieden werden.

Das erfindungsgemäße Verfahren zur Herstellung eines Gleitgeräts sowie das dementsprechende durch das erfindungsgemäße Verfahren erhältliche Gleitgerät werden nachstehend unter Bezugnahme auf die Figuren näher erläutert.

Figur 1 zeigt schematisch einen typischen Aufbau einer Form zur Herstellung von Gleitgeräten mit flacher Oberfläche unter Verwendung eines trapezförmigen Ober- bzw. Schalengurts aus Gitterlaminaten.

Figur 2 zeigt beispielhaft einen Ausschnitt von bevorzugten Profilkanten mit laschenartigen Ausbildungen.

Figur 3 zeigt beispielhaft bevorzugte Profil kanten in Aufsicht.

Figur 4 zeigt beispielhaft einen typischen Aufbau einer Form zur Herstellung von Gleitgeräten mit flacher Oberfläche unter Verwendung eines bogenförmigen Ober- bzw. Schalengurts aus Gitterlaminaten, der zusätzlich ein flaches Verstärkungselement aus Gitterlaminaten aufweist.

Figur 5 zeigt beispielhaft einen typischen Aufbau einer Form zur Herstellung von Gleitgeräten mit dreidimensional strukturellen Elementen unter Verwendung eines trapezförmigen Ober- bzw. Schalengurts aus Gitterlaminaten.

Figur 6 zeigt beispielhaft einen typischen Aufbau einer Form zur Herstellung von Gleitgeräten mit dreidimensional strukturellen Elementen unter Verwendung eines bogenförmigen Ober- bzw. Schalengurts aus Gitterlaminaten, der zusätzlich ein flaches Verstärkungselement aufweist.

Figur 7 zeigt eine Fotographie der am stärksten bevorzugten Profilkasten.

Figur 8 zeigt beispielhaft einen typischen Aufbau einer Form zur Herstellung von Gleitgeräten mit dreidimensional strukturellen Elementen unter Verwendung eines bogenförmigen Ober bzw. Schalengurts aus Gitterlaminaten, der durch die Befestigungseinrichtungen in der Form fixiert wird und eines Untergurts, der nicht durch die Befestigungseinrichtungen fixiert wird.

Figur 9 zeigt beispielhaft einen typischen Aufbau einer Form zur Herstellung von Gleitgeräten mit dreidimensional strukturellen Elementen unter Verwendung eines trapezförmigen Ober- bzw. Schalengurts aus Gitterlaminaten, der durch die Befestigungseinrichtungen in der Form fixiert wird und eines Untergurts, der ebenfalls durch die Befestigungseinrichtungen fixiert wird.

Der in Figur 1 dargestellte Aufbau zeigt als bevorzugte Ausführungsform eine Form, die aus Formdeckel 1 und Formboden 2 besteht, zur Herstellung von Gleitgeräten mit flacher Oberfläche. In die Form werden Profilkanten 5 eingebracht, die laschenartige Ausbildungen 13 aufweisen. Durch die laschenartigen Ausbildungen 13 der Profilkanten 5 wird der Ober- bzw. Schalengurt 8 positionsstabil in der Form fixiert. In der in Figur 1 gezeigten Ausführungsform dient die Profilkante auch zur Befestigung der Laufsohle 6. Der Untergurt 7 ist auf bekannte Art und Weise, z.B. durch Verkleben mit der Läufsohle 6 verbunden. Ferner ist der Formdeckel 1 mit einer thermoplastischen Deckfolie 4 ausgekleidet.

Bei dieser bevorzugten Ausführungsform werden in die Form Profilkanten 5 eingebracht; die mit laschenartigen Ausbildungen 13 versehen sind, die zur Verankerung des Ober--oder Schalengurts 8 dienen. In einer bevorzugten Ausführungsform (in Figur 1 nicht dargestellt) wird auch der Untergurt 7 mit Hilfe der Profilkanten 5 in dem Formboden 2 positionsstabil befestigt, so dass die Profilkanten 5, Unter- 7 und Ober- oder Schalengurt 8 zusammen ein Verstärkungskonstrukt bilden. Unter- 7 und Ober- oder Schalengurt 8 bestehen bevorzugt aus faserverstärktem Kunststoff, der eine Gitterstruktur aufweist, wie vorstehend beschrieben, und sind somit für den bei der Herstellung den Kern bildenden Harzschaum durchlässig. Wird die Form auf übliche Art und Weise z.B. mit PUR-Schaum 9 ausgeschäumt, dringt der Schaum 9 in die Gitterstruktur des Ober- bzw. Schalengurts 8 ein bzw. durch diese hindurch und drückt die thermoplastische Deckfolie 4 an die Innenwand des Formdeckels 1. Dadurch, dass der Schaum 9 auch in den Bereich 3 der Form eindringen kann, wird nicht nur eine besonders stabile Befestigung des Ober- bzw. Schalengurts 8 erreicht werden, sondern auch eine besonders gute Verbindung der Profilkante 5 mit dem Ober- bzw. Schalengurt 8. Darüber hinaus wird auch die Laufsohle 6 durch den ausgehärteten Schaum, mit dem sie an den Seiten 17 in Kontakt ist, mit dem Schaumkörper 9 und dem Untergurt 7 fest verbunden. Falls der Untergurt 7 wie der Ober-oder Schalengurt 8 eine Gitterstruktur aufweist, dringt der Schaum auch durch den Untergurt 7 bis zur Laufsohle 6 und verbindet die Laufsohle 6 nach dem Aushärten besonders gut mit dem Untergurt 7. Insgesamt entsteht ein ausgesprochen stabiles Gleitgerät.

Während es bei der in Figur 1 gezeigten Ausführungsform bevorzugt ist, dass auch der Untergurt 7 aus einem faserverstärkten Kunststoff mit Gitterstruktur besteht, wie vorstehend beschrieben, kann auch ein übliches, festes Material für den Untergurt 7 verwendet werden.

Eine Ausführungsform der Profilkanten 5 ist Figur 2 zu entnehmen, die schematisch einen Ausschnitt einer Profilkante darstellt. Die Profilkante 5 besteht bevorzugt aus Stahl und weist laschenartige Ausbildungen 13 auf. Wie in Figur 2 gezeigt haben die laschenartigen Ausbildungen 13 einen Winkel α < 90° zur Kantenflanke. Die in Figur 2 gezeigte Ausführungsform einer Profilkante 5 kann besonders einfach hergestellt werden. Die Profilkante weist wie die in der EP-A 601 024 offenbarte Profilkante eine Flanke 16 auf. Die laschenartigen Ausbildungen 13 können hier besonders einfach hergestellt werden, indem in die Flanke 16 der Profilkante 5 rechteckige Aussparungen gestanzt werden, wobei jedoch an einer Seite des Rechtecks eine feste Verbindung zu der Flanke 16 der Profilkante 5 verbleibt. Die laschenartigen Ausbildungen 13 erhält man dann, indem man die Aussparungen aufbiegt, bis der gewünschte Winkel α erhalten ist. Der Winkel α der laschenartigen Ausbildungen 13 kann gegebenenfalls auch noch nach dem Einsetzen der Profilkante 5 in die Ausschäumform an die jeweilige Form des Ober- bzw. Schalengurts angepasst werden.

Eine weitere Ausführungsform der Profilkanten ist in Figur 3 dargestellt, die verschiedene bevorzugte Profilkanten a-e in Aufsicht zeigt. Die Profilkanten weisen eine Oberseite 18 und laschenartige Ausbildungen 19 auf. Zur Befestigung des Ober- bzw. Schalengurts und/oder des Untergurts werden die laschenartigen Ausbildungen 19 teilweise aufgebogen, bis ein gewünschter Winkel α < 90° zu den nicht aufgebogenen laschenartigen Ausbildungen erreicht ist. Anders als bei der in Figur 2 gezeigten Ausführungsform sollten bei dieser Ausführungsform der Profilkante nicht alle laschenartigen Ausbildungen aufgebogen sein, sondern bevorzugt wird nur eine bestimmte Anzahl der Laschen aufgebogen, z. B. jede zweite, jede dritte etc. Der Ober- bzw. Schalengurt und/oder der Untergurt werden anschließend zwischen aufgebogenen und nicht aufgebogenen laschenartigen Ausbildungen eingefügt und somit befestigt. Auch bei dieser Ausführungsform der laschenartigen Ausbildungen 19 ist es möglich den Winkel α nachträglich an die jeweilige Form des Ober- bzw. Schalengurts anzupassen. Bei der hier gezeigten Ausführungsform weist die Profilkante anders als bei der in Figur 2 gezeigten Ausführungsform daher keine Flanke im eigentlichen Sinne auf sondern die Flanke wird durch die nicht aufgebogenen laschenartigen Ausbildungen gebildet.

Der Ober- bzw. Schalengurt 8 kann eine trapezförmige Struktur aufweisen, wie es in Figur 1 gezeigt ist, aber auch, wie beispielhaft in Figur 4 gezeigt, bogenförmig ausgebildet sein. Bei der in Figur 4 gezeigten, beispielhaften Ausführungsform ist der bogenförmig ausgebildete Ober- bzw. Schalengurt 8 auf der Oberseite noch mit einem zusätzlichen, ebenen Verstärkungselement 11 verbunden, das z.B. zur Befestigung der Bindung dient.

Bei der in Figur 4 gezeigten Ausführungsform wird nur der Ober- bzw. Schalengurt 8 und die Laufsohle 6 durch die Profilkante 5 in der Form fixiert, nicht der Untergurt 7. Falls auch der Untergurt 7 durch die Profilkante fixiert wird, ist es besonders bevorzugt, dass der Untergurt 7 aus gitterförmigem Material aufgebaut ist, wie vorstehend beschrieben. Hierdurch kann der Schaum beim Schauminjektionsverfahren durch die Gitterstruktur des Untergurts 7 hindurch bis zur Laufsohle 6 dringen und so beim Aushärten eine feste Verbindung zwischen Schaumkörper 9, Untergurt 7 und Laufsohle 6 herstellen.

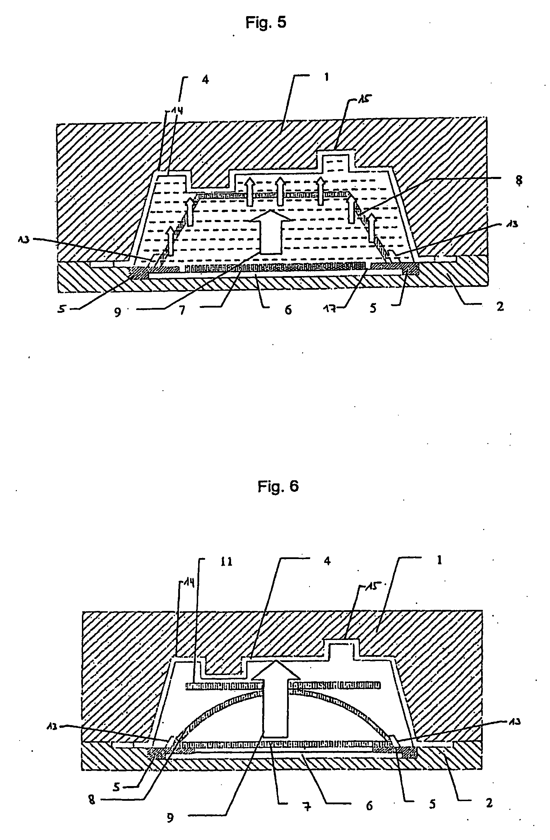

Figuren 5 und 6 zeigen Formen zur Herstellung von Gleitgeräten mit dreidimensionalen Elementen auf der Oberseite. In Figur 5 ist der Ober-oder Schalengurt 8 trapezförmig, in Figur 6 ist der Ober- oder Schalengurt 8 bogenförmig mit einem ebenen Verstärkungselement 11 ausgebildet. Bei beiden Ausführungsformen ist der Ober- bzw. Schalengurt 8 aus einem gitterförmigen Material aufgebaut, wie vorstehend beschrieben. Bevorzugt ist auch das zusätzliche Verstärkungselement 11 aus diesem Material.

Bei den dort beschriebenen Ausführungsformen wird in dem Injektionsverfahren, das analog zum zuvor beschriebenen Verfahren durchgeführt wird, eine Form verwendet, deren Formdeckel 1 mindestens ein dreidimensional strukturelles Element aufweist, wobei in der in den Figuren 5 und 6 gezeigten, beispielhaften Ausführungsform zwei dreidimensionale Elemente 14 und 15 dargestellt sind. Während des Schauminjektionsverfahrens dringt der Schaum 9 in die Form ein und durchdringt den gitterförmigen Ober- oder Schalengurt 8. Der Schaum 9 füllt dabei auch die dreidimensionalen Elemente 14 und 15 der Form aus und fixiert die thermoplastische Deckfolie 4 an der Innenseite des Formdeckel 1.

In der in Figur 5 gezeigten Ausführungsform wird die Laufsohle 6 ebenfalls durch die Profilkanten 5 in der Form fixiert, und der Untergurt 7 ist auf der Laufsohle 6 befestigt. Bei dieser Ausführungsform ist es nicht erforderlich, dass auch der Untergurt 7 aus einem gitterförmigen Material besteht, wie es im Zusammenhang mit dem Ober- bzw. Schalengurt 8 ausführlich beschrieben wurde, da der Harzschaum 9 sowohl mit dem Untergurt 7 in Kontakt ist, aber auch an den Stellen 17 mit der Laufsohle 6 in Kontakt ist und damit eine gute Verbindung zwischen Laufsohle 6, Untergurt 7 und Schaumkörper 9 besteht. Selbstverständlich kann aber auch bei dieser Ausführungsform der Untergurt 7 aus einer Gitterstruktur bestehen.

Bei der in Figur 6 gezeigten Ausführungsform wird nicht nur der Ober- bzw. Schalengurt 8 durch die Profilkante 5 in der Form fixiert, sondern auch der Untergurt 7 und die Laufsohle 6. Bei dieser Ausführungsform ist es besonders bevorzugt, dass der Untergurt 7 aus dem gitterförmigen Material aufgebaut ist, wie vorstehend beschrieben. Hierdurch kann der Schaum beim Schauminjektionsverfahren durch die Gitterstruktur des Untergurts 7 hindurch bis zur Laufsohle 6 dringen und so nach dem Aushärten eine feste Verbindung zwischen Schaumkörper 9, Untergurt 7 und Laufsohle 6 herstellen.

In einer bevorzugten Ausführungsform ist das dreidimensional strukturelle Element, wie beispielhaft in Figur 5 oder Figur 6 gezeigt, ausgebildet, es kann aber auch in einer weiteren bevorzugten Ausführungsform, wie in der DE-A 34 37 865 beschrieben, ausgeformt sein.

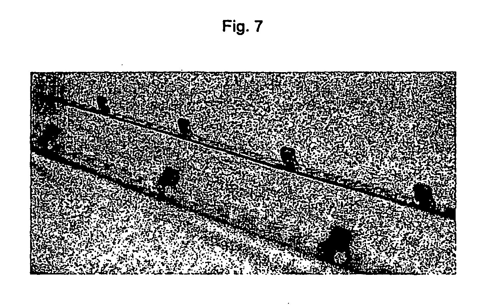

Figur 7 zeigt ein Photo von Profilkanten, wie sie besonders vorteilhaft in dem erfindungsgemäßen Verfahren eingesetzt werden können.

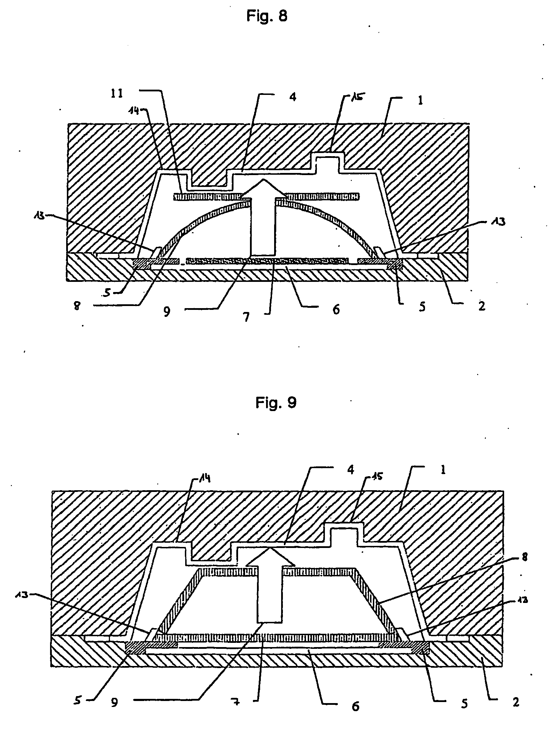

Figur 8 zeigt eine Ausführungsform, die der Ausführungsform der Figur 6 entspricht, allerdings sind hier nur der bogenförmige Ober- bzw. Schalengurt 8 und die Laufsohle 6 durch die Befestigungseinrichtungen 13 der Profilkanten 5 fixiert, nicht aber der Untergurt 7.

In der in Figur 9 gezeigten Ausführungsform, die ansonsten der Ausführungsform der Figur 5 entspricht, werden sowohl der trapezförmige Ober- bzw. Schalengurt 8 als auch der Untergurt 7 durch die Befestigungseinrichtung 13 der Profilkanten 5 fixiert. Bei einer derartigen Ausführungsform ist es besonders bevorzugt, dass der Untergurt 7 aus einem gitterförmigen Material besteht, um während des Ausschäumungsvorgangs einen Durchtritt des Schaumes 9 zur Laufsohle 6 zu ermöglichen, so dass die Laufsohle 6 fest mit dem Untergurt 7 und dem Schaumkörper 9 verbunden wird.

Das erfindungsgemäße Verfahren stellt ein Schauminjektionsverfahren bereit, das es ermöglicht, Gleitgeräte unterschiedlicher Oberflächenstruktur herzustellen, bei dem der Ober- oder Schalengurt nicht mehr, z.B. in Form eines Prepregs, separat vorgeformt und genau an die jeweilige Außenform des Gleitgeräts angepasst werden muss und das überdies eine Verbindung der einzelnen Gurte ohne die Verwendung von Klebstoff ermöglicht. Die Anwendung des durch die Erfindung bereitgestellten Verfahrens führt zu einer Reduktion der Produktionszeit und der Produktionskosten. Die erhaltenen Gleitgeräte weisen bei geringem Gewicht ausgezeichnete mechanische Eigenschaften auf.

## Patentansprüche

1. Verfahren zur Herstellung eines Gleitgeräts, wobei in eine Form mit einem Formboden (2) und einem Formdeckel (1), die dem Gleitgerät entspricht, Profilkanten (5), Untergurt (7) und Ober- oder Schalengurt (8) eingebracht werden und die Form anschließend in einem Harzschauminjektionsverfahren ausgeschäumt wird, der Ober- oder Schalengurt (8) zumindest eine Schicht aufweist, die aus faserverstärktem Kunststoff besteht, der eine Gitterstruktur aufweist, und bei dem Harzschauminjektionsverfahren der Harzschaum (9) in die Gitterstruktur ein- und gegebenenfalls durch die Gitterstruktur hindurch dringt, **dadurch gekennzeichnet, dass** die Profilkanten (5) Befestigungseinrichtungen (13) aufweisen und der Ober- oder Schalengurt (8) durch diese Befestigungseinrichtungen (13) lösbar mit den Profilkanten (5) verbunden und in der Form fixiert wird.

2. Verfahren nach Anspruch 1, **dadurch gekennzeichnet, dass** der Untergurt (7) und/oder der Ober- oder Schalengurt (8) zwei Schichten aus faserverstärktem Kunststoff aufweist.

3. Verfahren nach Anspruch 1 oder 2, **dadurch gekennzeichnet, dass** die Schicht aus faserverstärktem Kunststoff einzelne, quer zur Abkantrichtung liegende, verstreckbare Faseranteile aufweist.

4. Verfahren nach Anspruch 3, **dadurch gekennzeichnet, dass** die verstreckbaren Faseranteile, die quer zur Abkantrichtung liegen, zu Bündeln kombiniert sind.

5. Verfahren nach einem der Ansprüche 1 bis 4, **dadurch gekennzeichnet, dass** der Kunststoff Epoxy, Polyester oder Polyurethan ist.

6. Verfahren nach einem der Ansprüche 1 bis 5, **dadurch gekennzeichnet, dass** der Ober- oder Schalengurt (8) eine bogenförmige Struktur und auf der Oberseite ein zusätzliches Verstärkungselement (11) aufweist, oder eine trapezförmige Struktur besitzt.

7. Verfahren nach einem der Ansprüche 1 bis 6, **dadurch gekennzeichnet, dass** die Befestigungseinrichtungen (13) laschenartigen Ausbildungen der Profilkasten (5) umfassen, die zur Kantenflanke (16) einen Winkel α<90° aufweisen.

8. Verfahren nach einem der Ansprüche 1 bis 7, **dadurch gekennzeichnet, dass** zumindest eine der Profilkanten (5) laschenartige Ausbildungen (13) aufweist, die in Richtung zu der gegenüberliegenden Profilkante (5) mit einer zu der Unterseite des Gleitgeräts parallelen Ebene einen Winkel α<90°bildet und der Ober- oder Schalengurt (8) durch diese laschenartigen Ausbildungen (13) vor dem Ausschäumen lösbar mit den Profilkanten (5) verbunden und in der Form fixiert werden.

9. Verfahren nach Anspruch 8, **dadurch gekennzeichnet, dass** beide Profilkanten (5) laschenartige Ausbildungen (13) aufweisen, die in Richtung zu der jeweils gegenüberliegenden Profilkante (5) mit einer zu der Unterseite des Gleitgeräts parallelen Ebene einen Winkel a<90°bilden.

10. Verfahren nach einem der Ansprüche 1 bis 9, **dadurch gekennzeichnet, dass** die Profilkanten (5) aus Stahl bestehen.

11. Verfahren nach einem der Ansprüche 1 bis 10, **dadurch gekennzeichnet, dass** die Form mit PUR-Harzschaum, Polyester- oder Epoxyschaum ausgeschäumt wird.

12. Verfahren nach einem der Ansprüche 1 bis 11, **dadurch gekennzeichnet, dass** zumindest ein Teil des Ober- oder Schalengurts (8) mit einer thermoplastischen Folie (4) bedeckt ist, die sich während der Ausschäumung der von dem Formdeckel (1) vorgegebenen Außenstruktur des Gleitgeräts anpasst.

13. Verfahren nach einem der Ansprüche 1 bis 12, **dadurch gekennzeichnet, dass** der Formdeckel (1) mindestens ein dreidimensionales strukturelles Element aufweist.

14. Gleitgerät erhältlich nach dem Verfahren nach einem der Ansprüche 1 bis 13.

15. Gleitgerät nach Anspruch 14, **dadurch gekennzeichnet, dass** zumindest eine der Profilkanten (5) laschenartige Ausbildungen (13) aufweist, die in Richtung zu der gegenüberliegenden Profilkante (5) mit einer zur Unterseite des Gleitgeräts parallelen Ebene einen Winkel α<90° bildet.

## Claims

1. A process for the production of a sliding device, wherein profile edges (5), bottom belt (7) and top or shell belt (8) are inserted in a mold having a mold bottom (2) and a mold cover (1) corresponding to the sliding device and the mold is subsequently foamed in a resin foam injection method, the top or shell belt (8) has at least one layer made of fiber-reinforced plastics which has a grid structure and in the resin foam injection method the resin foam (9) enters into the grid structure and penetrates it, where appropriate, **characterized in that** the profile edges (5) have attachment means (13) and the top or shell belt (8) is detachably connected with the profile edges (5) by these attachment means (13) and fixed in the mold.

2. The process according to claim 1, **characterized in that** the bottom belt (7) and/or the top or shell belt (8) has two layers made of fiber-reinforced plastics.

3. The process according to claim 1 or 2, **characterized in that** the layer made of fiber-reinforced plastics has individual, readily stretchable fiber portions disposed transversely to the bending direction.

4. The process according to claim 3, **characterized in that** the readily stretchable fiber portions which are disposed transversely to the bending direction are combined into bundles.

5. The process according to any of claims 1 to 4, **characterized in that** the plastics is epoxy, polyester or polyurethane.

6. The process according to any of claims 1 to 5, **characterized in that** the top or shell belt (8) has an arcuate structure and an additional reinforcement element (11) on the top side or a trapezoidal structure.

7. The process according to any of claims 1 to 6, **characterized in that** the attachment means (13) comprise lug-like developments of the profile edges (5) which have an angle α < 90° relative to the edge flank (16).

8. The process according to any of claims 1 to 7, **characterized in that** at least one of the profile edges (5) has lug-like developments (13), which towards the opposite profile edge (5) form an angle α < 90° with a plane parallel to the bottom side of the sliding device and the top or shell belt (8) is detachably connected and fixed in the mold with the profile edges (5) by these lug-like developments (13) prior to foaming.

9. The process according to claim 8, **characterized in that** both profile edges (5) have lug-like developments (13) which towards the respectively opposite profile edge (5) form an angle α < 90° with a plane parallel to the bottom side of the sliding device.

10. The process according to any of claims 1 to 9, **characterized in that** the profile edges (5) are made of steel.

11. The process according to any of claims 1 to 10, **characterized in that** the mold is foamed with PUR resin foam, polyester or epoxy foam.

12. The process according to any of claims 1 to 11, **characterized in that** at least part of the top or shell belt (8) is covered with a thermoplastic film (4) which during foaming is adapted to the sliding device outer structure defined by the mold cover (1).

13. The process according to any of claims 1 to 12, **characterized in that** the mold cover (1) has at least one three-dimensional structural element.

14. The sliding device obtainable with the process according to any of claims 1 to 13.

15. The sliding device according to claim 14, **characterized in that** at least one of the profile edges (5) has lug-like developments (13) which towards the opposite profile edge (5) form an angle α < 90° with a plane parallel to the bottom side of the sliding device.

## Revendications

1. Procédé de production d'un dispositif de glisse, dans lequel des arêtes profilées (5), une semelle inférieure (7) et une semelle supérieure ou en coque (8) sont introduites dans un moule avec un fond de moule (2) et un couvercle de moule (1), lequel moule correspond au dispositif de glisse et le moule est ensuite rempli de mousse dans un procédé d'injection de mousse de résine, la semelle supérieure ou en coque (8) présente au moins une couche, qui est en plastique renforcé de fibres, qui présente une structure réticulaire, et lors du procédé d'injection de mousse de résine, la mousse de résine (9) pénètre dans la structure réticulaire et traverse le cas échéant la structure réticulaire, **caractérisé en ce que** les arêtes profilées (5) présentent des dispositifs de fixation (13) et la semelle supérieure ou en coque (8) est reliée aux arêtes profilées (5) de manière amovible par ces dispositifs de fixation (13) et est fixée dans le moule.

2. Procédé selon la revendication 1, **caractérisé en ce que** la semelle inférieure (7) et/ou la semelle supérieure ou en coque (8) présente deux couches en plastique renforcé de fibres.

3. Procédé selon la revendication 1 ou 2, **caractérisé en ce que** la couche en plastique renforcé de fibres présente des parts de fibres isolées, étirables, situées transversalement à la direction du chanfrein.

4. Procédé selon la revendication 3, **caractérisé en ce que** les parts de fibres étirables, qui se trouvent transversalement à la direction du chanfrein, sont combinées en faisceaux.

5. Procédé selon l'une quelconque des revendications 1 à 4, **caractérisé en ce que** le plastique est de l'époxy, du polyester ou du polyuréthane.

6. Procédé selon l'une quelconque des revendications 1 à 5, **caractérisé en ce que** la semelle supérieure ou en coque (8) présente une structure cintrée et sur la face supérieure, un élément de renforcement (11) supplémentaire ou dispose d'une structure trapézoïdale.

7. Procédé selon l'une quelconque des revendications 1 à 6, **caractérisé en ce que** les dispositifs de fixation (13) comprennent des formations de type éclisse des arêtes profilées (5), qui présentent un angle α < 90° par rapport au flanc des arêtes (16).

8. Procédé selon l'une quelconque des revendications 1 à 7, **caractérisé en ce qu'**au moins une des arêtes profilées (5) présente des formations (13) de type éclisse, qui forme dans le sens de l'arête profilée (5) opposée un angle α < 90° avec un plan parallèle à la face inférieure du dispositif de glisse et la semelle supérieure ou en coque (8) est reliée aux arêtes profilées (5) de manière amovible avant moussage par ces formations (13) de type éclisse et est fixée dans le moule.

9. Procédé selon la revendication 8, **caractérisé en ce que** les deux arêtes profilées (5) présentent des formations (13) de type éclisse, qui forment dans le sens de l'arête profilée (5) respectivement opposée un angle α < 90° avec un plan parallèle à la face inférieure du dispositif de glisse.

10. Procédé selon l'une quelconque des revendications 1 à 9, **caractérisé en ce que** les arêtes profilées (5) sont en acier.

11. Procédé selon l'une quelconque des revendications 1 à 10, **caractérisé en ce que** le moule est rempli de mousse de résine PUR, de mousse de polyester ou de mousse d'époxy.

12. Procédé selon l'une quelconque des revendications 1 à 11, **caractérisé en ce qu'**au moins une partie de la semelle supérieure ou en coque (8) est couverte d'un film thermoplastique (4) qui s'adapte pendant le remplissage de mousse à la structure extérieure du dispositif de glisse prédéfinie par le couvercle de moule (1).

13. Procédé selon l'une quelconque des revendications 1 à 12, **caractérisé en ce que** le couvercle de moule (1) présente au moins un élément structurel tridimensionnel.

14. Dispositif de glisse réalisable selon le procédé selon l'une quelconque des revendications 1 à 13.

15. Dispositif de glisse selon la revendication 14, **caractérisé en ce qu'**au moins une des arêtes profilées (5) présente des formations (13) de type éclisse, qui forme dans le sens de l'arête profilée (5) opposée un angle α < 90° avec un plan parallèle à la face inférieure du dispositif de glisse.
